(19) Europäisches Patentamt
European Patent Office
Office européen des brevets

(11) Veröffentlichungsnummer: **0 314 986**
**A1**

(12) **EUROPÄISCHE PATENTANMELDUNG**

(21) Anmeldenummer: **88117457.7**

(51) Int. Cl.⁴: **C08G 73/16**

(22) Anmeldetag: **20.10.88**

(30) Priorität: **31.10.87 DE 3737067**

(43) Veröffentlichungstag der Anmeldung:
**10.05.89 Patentblatt 89/19**

(84) Benannte Vertragsstaaten:
**DE FR GB IT**

(71) Anmelder: **BAYER AG**
**Konzernverwaltung RP Patentabteilung**
**D-5090 Leverkusen 1 Bayerwerk(DE)**

(72) Erfinder: **Dicke, Hans-Rudolf, Dr.**
**Baumhofstrasse 28**
**D-5780 Bestwig(DE)**
Erfinder: **Genz, Joachim, Dr.**
**Bodelschwinghstrasse 16**
**D-4150 Krefeld(DE)**
Erfinder: **Eckhardt, Volker, Dr.**
**Bodelschwinghstrasse 14**
**D-4150 Krefeld(DE)**
Erfinder: **Bottenbruch, Ludwig, Dr.**
**Wöhlerstrasse 5**
**D-4150 Krefeld(DE)**

(54) **Thermotrope Polyesterimide mit ausgezeichneter Wärmeformbeständigkeit, Verfahren zu ihrer Herstellung und ihre Verwendung zur Herstellung von Formkörpern, Filamenten, Fasern und Folien.**

(57) Thermotrope Polyesterimide mit wiederkehrenden Einheiten der Formeln

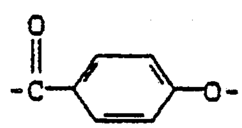

und

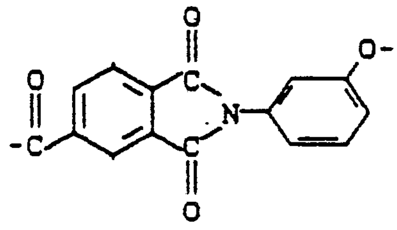

besitzen eine ausgezeichnete Wärmeformbeständigkeit und dienen zur Herstellung von Formkörper. Filamenten, Fasern und Folien.

EP 0 314 986 A1

# Thermotrope Polyesterimide mit ausgezeichneter Wärmeformbeständigkeit, Verfahren zu ihrer Herstellung und ihre Verwendung zur Herstellung von Formkörpern, Filamenten, Fasern und Folien

Die Erfindung betrifft hochmolekulare thermotrope Polyesterimide mit ausgezeichneter Wärmeformbeständigkeit, ein Verfahren zu ihrer Herstellung und ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polykondensate sind hinreichend bekannt, vergleiche z.B.

F.E. McFarlane et al., Liquid Crystal Polymers II, Contemporary Topics in Polymer Science, Vol. 2, Plenum Publishing Corporation, 1977;

W.J. Jackson und H.F. Kuhfuss, J. Polymer Science, Polymer Chem. Ed. 14, 2042 (1976);

W.C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978,

J. Preston, Angew. Makromol. Chem. 109/110, 1-19 (1982);

A. Ciferri, W.R. Krigbaum, R.B. Meyer, "Polymer Liquid Crystals", Academic Press, New York, 1982;

M.G. Dobb und J.E. McIntyre, Advances in Polym. Sci 60/61, Springer-Verlag, Berlin 1984;

EP-A 1 185, 1 340, 8 855, 11 640, 15 856, 17 310, 18 145, 22 344, 44 204, 49 615, 131 846, 232 637, 134 956, 134 959, 141 320, 165 399, 170 935, 189 073;

US 3 991 013, 3 991 014, 4 066 620, 4 067 852, 4 083 829, 4 107 143;

WO 79/797, 79/1030, 79/1040.

Der flüssigkristalline Zustand von Polyesterschmelzen läßt sich mit Hilfe eines Polarisationsmikroskops untersuchen; für die Untersuchungen war das Okular mit einem aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Schichtdicke der untersuchten Polyesterschmelzen betrug 100 µm.

Die Untersuchung der Polyester erfolgte nach dem Aufschmelzen der Proben bei Temperaturen zwischen 140 und 400 °C. Sofern in diesem gesamten Bereich oder in einem Teil davon eine Aufhellung der zwischen den gekreuzten Nicolschen Prismen beobachteten Schmelze auftrat, wurde der Polyester als thermotrop flüsigkristallin eingestuft.

Die flüssigkristallinen Polykondensate zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Properties und Methods of Investigation", insbesondere Chapter 3, John Wiley & Sons, New York, Sydney, Toronto, 1974, beschrieben ist.

Formkörper, die aus flüssigkristalliner Schmelze vollaromatischer Polykondensate hergestellt werden, weisen mechanische Festigkeiten und Steifigkeiten auf, wie sie normalerweise bei unverstärkten, aus isotroper Schmelze verarbeiteten Polykondensaten nicht gefunden werden. Zur Synthese von thermotropen Polykondensaten werden üblicherweise solche Monomere eingesetzt, die zu starren, stäbchenförmigen Makrolomolekülen oder Makromolekülsegmenten führen. So wurden z.B. flüssigkristalline Polyester aus p-Hydroxybenzoesäure, Hydrochinon und Isophthalsäure (vgl. z.B. DE-OS 2 025 971) oder flüssigkristalline Polyesterimide aus 2-Hydroxy-6-naphthoesäure, Chlorhydrochinon und 4-(4′-Carboxyphthalimido)-benzoesäure (vgl. z.B. EP 84 256) beschrieben. Diese Produkte sind thermoplastisch verarbeitbar, sie weisen jedoch den Nachteil auf, daß ihre Glastemperatur $T_g$ relativ gering und somit die maximal erreichbare Dauerwärmeformbeständigkeit limitiert ist. Bei den bislang beschriebenen, thermoplastisch verarbeitbaren flüssigkristallinen Polyestern und Polyesterimiden liegen die Glastemperaturen üblicherweise unterhalb 180 °C, in den meisten Fällen sogar unter 150 °C.

Die Aufgabe der vorliegenen Erfindung bestand daher darin, thermoplastisch verarbeitbare flüssigkristalline Polykondensate bereitzustellen, die erhöhte Wärmeformbeständigkeiten aufweisen. Bevorzugte neue thermotrope Polykondensate sollten bei einer Temperatur unterhalb von 380 °C, vorzugsweise unterhalb

350 °C, eine flüssigkristalline Schmelzphase ausbilden.

Bevorzugte neue thermotrope Polykondensate sollten eine Glasübergangstemperatur von mehr als 200 °C, vorzugsweise von mehr als 210 °C, aufweisen.

Überraschenderweise wurde nun gefunden, daß Polyesterimide, die einkondensierten Reste von p-Hydroxybenzoesäure und N-(3-Hydroxyphenyl)-trimellitsäureimid enthalten, die gewünschte Kombination vorteilhafter Eigenschaften besitzen.

Gegenstand der Erfindung sind thermotrope Polyesterimide mit wiederkehrenden Einheiten der Formeln

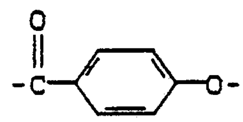

(I)

und

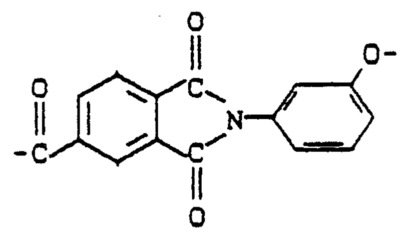

(II) ,

wobei die Polyesterimide die einkondensierte Reste
(I) in einer Menge von 60 bis 80 Mol-%, vorzugsweise von 65 bis 75 Mol-%,
bezogen auf die Summe der einkondensierten Reste (I) und (II) enthalten.

Einheit (I) ist abgeleitet von p-Hydroxybenzoesäure oder deren reaktive Derivate, wie die Arylester oder Acylester. Als bevorzugte reaktive Derivate seien die Phenylester, die Tolylester, die Acetate und die Propionate genannt. Besonders bevorzugt sind die Acetate.

Einheit (II) ist abgeleitet von N-(3-hydroxyphenyl)-trimellitsäureimid oder deren reaktive Derivate, wie die Arylester oder Acylester.

Die Herstellung von N-(3-Hydroxyphenyl)-trimellitsäureimid kann nach literaturbekannten Methoden aus m-Aminophenol und Trimellitsäureanhydrid erfolgen (vgl. z.B. K. Kurita und S. Matsuda, Makromol. Chem., 184, 1223 (1983)).

Die erfindungsgemäßen Polyesterimide können die Einheiten aus den Resten I und II in statistischer Verteilung oder in Blöcken enthalten. Es ist allerdings zu beachten, daß längere Blöcke dieser Einheiten die Schmelzviskosität und den Schmelzpunkt der resultierenden Produkte stark erhöhen können.

Als Endgruppen können die erfindungsgemäßen Polyesterimide - COOH, -H, -OH, $-OC_6H_5$, Acyloxy oder von Kettenabbrechern herrührende Reste enthalten. Bevorzugte Ket tenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol, und aromatische Monocarbonsäuren, wie Diphenylcarbonsäuren und Naphthalincarbonsäuren. Kettenabbrecher können in Mengen von etwa 0,1 bis 10,0 Mol-%, bevorzugt 0,2 bis 5,0 Mol-%, bei Carbonsäuren bezogen auf die Summe der Restel und II, bei Phenolen bezogen auf die Reste I und II, eingesetzt werden.

Es können auch verzweigende drei- oder höherfunktionelle - vorzugsweise aromatische - Monomere in Mengen von etwa 0,1 bis 2,0, bevorzugt 0,2 bis 1,0 Mol-%, Phloroglucin, 1,3,5-Benzoltricarbonsäure und 3,5-Dihydroxybenzoesäure, eingesetzt weden.

Die erfindungsgemäßen Polyesterimide sind in den von uns erprobten Lösungsmitteln, wie p-Chlorphenol oder Phenol/1,1,2,2-Tetrachlorethan (1:1 Gew.-Verhältnis) unlöslich.

Die erfindungsgemäßen Polyesterimide besitzen im allgemeinen eine Schmelzviskosität von weniger als 1.000 Pa.s, bevorzugt 10 bis 500 Pa.s, gemessen bei einer Schergeschwindigkeit von $10^3$ $sec^{-1}$ unter Verwendung einer Düse mit einem Länge/Durchmesserverhältnis von 20 bei einer Temperatur von weniger als 380 °C, vorzugsweise weniger als 350 °C.

Die erfindungsgemäßen Polyesterimide können nach verschiedenen Verfahren hergestellt werden, z.B. durch Kondensation bzw. Umesterung der von den Resten I und II abgeleiteten Hydroxycarbonsäuren oder ihrer reaktionsfähigen Derivaten und anschließende Polykondensation (vgl. z.B. R.W. Lenz, "Synthetic routes to liquid crystalline polymers" in: Recent Advances in Liquid Crystalline Polymers, Elsevier, New

York 1985).

Beispiele für bevorzugte Ausgansverbindungen sind ihre Arylester und ihre Acylester.

Beispiele für bevorzugte Syntheseverfahren sind die Umsetzung der niederen Acylester der von den wiederkehrenden Einheiten (I) und (II) abgeleiteten Hydroxycarbonsäuren, wobei die Acylester auch in situ hergestellt werden können, sowie die Umsetzung der Arylester der von den wiederkehrenden Einheiten (I) und (II) abgeleiteten Hydroxycarbonsäuren, wobei dei Arylester ebenfalls in situ hergestellt werden können.

Nach einem besonders bevorzugten Syntheseverfahren werden die niederen Acylester, vorzugsweise die Acetate der von den Resten (I) und (II) abgeleiteten Hydroxycarbonsäuren umgesetzt, wobei die Acylester auch in situ hergestellt werden können.

Nach einem weiteren bevorzugten Syntheseverfahren werden die von den Resten II abgeleiteten Hydroxycarbonsäuren durch Umsetzung von Trimellitsäureanhydrid und 3-Aminophenol in situ erzeugt, acetyliert und ohne weitere Isolierung mit den niederen Acylestern, vorzugsweise den Acetaten, der von den Resten (I) abgeleiteten Hydroxycarbonsäure umgesetzt.

Diese Reaktionen können in der Schmelze durchgeführt werden; möglich ist jedoch auch die Reaktion in Gegenwart eines flüssigen wärmeüberleitenden Mediums, das einen hohen Siedepunkt hat (vgl. z.B. DE-OS 2 025 971).

Die Reste I und II werden im Verhältnis der Ausgangskomponenten in den Polyester eingebaut.

Es kann zweckmäßig sein, sowohl die Kondensations- bzw. Umesterungsreaktionen als auch die Polykondensationsreaktionen katalytisch zu beschleunigen. Derartige Katalysatoren sind bekanntlich, z.B. lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Natriumacetat, Kaliumacetat, Calciumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Dibutylzinn-diacetat, Di-butyl-dimethoxy-zinn.

Die Katalysatormengen betragen vorzugsweise etwa 0,001 bis 1, insbesonder 0,01 bis 0,2 Gew.-%, bezogen auf das Gesamtgewicht der eingesetzten Monomeren.

Die erfindungsgemäßen Polyesterimide können bei Temperaturen von etwa 150 bis 380 °C, hergestellt werden, wobei man im allgemeinen die Reaktion bei niedrigen Temperaturen beginnt und im Verlaufe der Reaktionsfortschreitung kontinuierlich die Temperatur erhöht. Bei nachlassender Reaktionsgeschwindigkeit kann ein Vakuum angelegt werden, wobei der Druck vorzugsweise kontinuierlich von Normaldruck bis ca. 0,1 mbar gesenkt wird.

Das erhaltene Produkt kann - in Granulat - oder Pulverform- einer Festphasennachkondensatio unter vermindertem Druck bei Temperaturen von 510 bis 300 °C, bevorzugt 200 bis 250 °C, unterworfen werden; nach 1 bis 25 Stunden haben sich das Molekulargewicht erhöht und die daraus resultierenden Eigenschaften des Polyesterimides merklich verbessert.

Weiterer Gegenstand der Erfindung ist also ein Verfahren zur Herstellung der neuen Polyesterimide, das dadurch gekennzeichnet ist, daß man die von den Resten II abgeleiteten Hydroxycarbonsäuren, die auch in situ aus Trimellitsäureanhydrid und 3-Aminophenol erzeugt werden können, mit den von den Resten I abgeleiteten Hydroxycarbonsäuren oder deren reaktiven Derivaten, die ebenfalls in situ erzeugt werden können, gegebenenfalls in Gegenwart von Katalysatoren, Kettenabbrechern und Verzweigungsmitteln, bei Temperaturen von 150 bis 380 °C, gegebenenfalls unter vermindertem Druck, umsetzt.

Die erfindungsgemäßen thermotropen Polyesterimide können infolge ihrer relativ geringen Schmelzviskosität vorteilhaft aus der Schmelze zu Spritzgußformteilen, Filamenten, Fasern, Bändern und Filmen verarbeitet werden, wobei durch auftretende Scherkräfte eine Molekülorientierung erzielt wird, die in hohem Maße von der Stärke der Scherkräfte beeinflußt wird. Des weiteren zeigen sie eine ausgeprägte Strukturviskosität, d.h., daß die Schmelzviskosität bei Erhöhung der Scherkräfte stark abfällt. Geeignete Verarbeitungsverfahren sind Spritzguß, Extrusion, Pultrusion, Pressen, Thermoformen und Schmelzspinnen.

Aus den erfindungsgemäßen Polyesterimiden können Formteile hoher Festigkeit und Steifigkeit, guter Zähigkeit - insbesondere im Bereich tiefer Temperaturen-, hoher Bruchdehnung und großer Dimensionsstabilität hergestellt werden. Da die Polyesterimide weiterhin hohe Chemika lienresistenz und gute Flammwidrigkeit aufweisen, eignen sie sich bevorzugt zur Herstellung von

- Umhüllungen von Lichtwellenleitern,
- elektrotechnischen Artikeln, wie Isolatoren, Leiterplatten für gedruckte Schaltungen, Steckkontakten,

Umhüllungen für integrierte Schaltungen, Armaturenteilen,
- Teilen chemisch-technischer Anlagen, wie Rohren, Behälterauskleidungen, Rotoren, Gleitlagern, Dichtungen, Füllkörpern,
- Teilen medizinisch-technischer Geräte, so wie Bauteilen von Klimaanlagen und Ventilen.

Die erfindungsgemäßen Polyesterimide können aber auch als Überzugs- und Beschichtungsmaterial (pulverförmig oder dispergiert) verwendet werden. Auch zur Herstellung verstärkter und/oder gefüllter Formmassen mit einem Verstärker- und/oder Füllstofgehalt von 5 bis 65 Gew.-%, bezogen auf verstärkte und/oder gefüllte Formmassen, sind sie bestens geeignet.

Weiterer Gegenstand der Erfindung ist also die Verwendung der neuen Polyesterimide zur Herstellung von Formkörpern, Filamenten, Fasern und Filmen.

## Beispiele

Die Untersuchung auf thermotropes flüssigkristallines Verhalten erfolgte nach dem weiter oben beschriebenen Verfahren. Zur Bestimmung der Glasübergangstemperatur und des Schmelzpunktes wurde die Differential Thermoanalyse (DTA) herangezogen (verwendetes Gerät: Mettler TA 3000 System, Aufheizgeschwindigkeit 20 °C/min).

## Beispiel 1

In diesem Beispiel wird die Herstellung von N-(3-Hydroxyphenyl)-trimellitsäureimid beschrieben.

In einem 6-l-Dreihalskolben mit KPG-Rührer, Rückflußkühler, Thermometer und Stickstoffeinleitung wurden die folgenden Substanzen eingewogen:

190,75 g m-Aminophenol
403,2 g Trimellitsäureanhydrid
3.150 g Essigsäure

Unter Rühren wurde im Verlauf von 2 Stunden bis zum Rückfluß erhitzt. Nach weiteren 4 Stunden unter Rückfluß wurde abgekühlt und der Ansatz in 6 l Eisessig geschüttet. Das ausgefallene Produkt wurde abgesaugt, mit heißem Wasser sowie heißem Isopropanol gewaschen und dann getrocknet. Erhalten wurde eine hellgrüne, feinkristalline Masse. Die Ausbeute betrug 432,3 g ≙ 87,3 % der Theorie. Die Bestimmung der Säurezahl ergab einen Wert von 196 bis 201 (Theorie 198).

## Beispiel 2

In diesem Beispiel wird die Herstellung von N-(3-Acetoxyphenyl)-trimellitsäureimid beschrieben.

191,85 g des Produktes aus Beispiel 1, 76,1 g Acetanhydrid und 270 ml Eisessig wurden in eine Apparatur, bestehend aus einem 1-l-Dreihalskolben, KPG-Rührer, Thermometer und Destillationsaufsatz eingefüllt. Nach Zugabe von 2 Tropfen konzentrierter Schwefelsäure wurde auf Rückfluß erhitzt, 2 Stunden unter Rückfluß gehalten und anschließend wurden ca. 3/4 der Essigsäure abdestilliert. Das Produkt wurde heiß abgesaugt, in Aceton aufgeschlämmt, abfiltriert und mit Aceton mehrfach gewaschen. Nach Trocknung bei 60 bis 70 °C wurden 170,5 g ≙ 77,4 % der Theorie isoliert.

## Beispiel 3

Herstellung eines erfindungsgemäßen Polyesterimides aus p-Acetoxybenzoesäure und N-(3-Acetoxyphenyl)-trimellitsäure.

In einen 1-l-Dreihalskolben mit Rührer, Destillationsaufsatz und Stickstoff-Einleitung wurden die folgenden Substanzen eingewogen:

227,71 g ≙ 0,7 Mol N-(3-Acetoxyphenyl)-trimellitsäure
382,49 g ≙ 2,1 Mol p-Acetoxybenzoesäure
0,044 g Magnesium

Nach mehrmaligen Evakuieren und Belüften mit Stickstoff wurde die Apparatur im Verlauf von 1 Stunde auf 230 °C aufgeheizt. Im Verlauf von weiteren 4 Stunden wurde die Temperatur stufenweise bis auf 330 °C erhöht. Bei dieser Temperatur wurde Vakuum angelegt und der Druck kontinuierlich bis auf 1,3 mbar

reduziert. Nach 20 Minuten bei diesem Vakuum wurde das Heizbad entfernt und das Produkt nach dem Abkühlen durch Zerschlagen des Kolbens isoliert. Erhalten wurde ein hellbeiges, faseriges Polyesterimid. Dieses Produkt war in allen untersuchten Lösungsmitteln, wie z.B. p-Chlorphenol oder Phenol 1,1,2,2-Tetrachlorethan (Gew.-Verhalten 1:1) unlöslich.

Polarisationsmikroskopisch wurde eine anisotrope Schmelzphase oberhalb 310 °C bis über 400 °C beobachtet. Die Glasübergangstemperatur dieses Polymeren lag bei 215,3 °C (1. Aufheizen) bzw. 218,7 °C (2. Aufheizen).

Beispiele 4 bis 6

In der in Beispiel 3 beschriebenen Apparatur und nach dem dort erläuterten Verfahren wurden weitere thermotrope Polyesterimide hergestellt. Die Zusammensetzungen der Produkte sowie die Ergebnisse der DSC- und polarisationsmikroskopischen Untersuchung sind in Tabelle 1 aufgeführt.

Tabelle 1

| Beispiel | pHB | N-ATS | Tg | anisotrope Schmelze |
|---|---|---|---|---|
| | [Mol-%] | | [°C] | |
| 4 | 70 | 30 | 214,1 | 290 °C bis >400 °C |
| 5 | 65 | 35 | 206,8 | 290 °C bis >400 °C |
| 6 | 60 | 40 | 213,5 | 280 °C bis >400 °C |

## Ansprüche

1. Thermotrope Polyesterimide mit wiederkehrenden Einheiten der Formeln

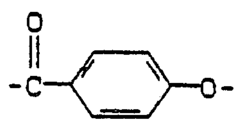

(I)

und

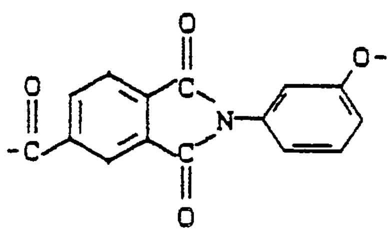

(II) ,

wobei die Polyesterimide die einkondensierte Reste (I) in einer Menge von 60 bis 80 Mol-%, bezogen auf die Summe der einkondensierten Reste (I) und (II) enthalten.

2. Polyesterimide nach Anspruch 1, dadurch gekennzeichnet, daß sie die einkondensierten Reste (I) in einer Menge von 65 bis 75 Mol-%, bezogen auf die Summe der einkondensierten Reste (I) und (II) enthalten.

3. Verfahren zur Herstellung der neuen Polyesterimide nach Ansprüchen 1 und 2, dadurch gekennzeichnet, daß man die von dem Rest (II) abgeleiteten Hydroxycarbonsäuren, die auch in situ erzeugt werden können, oder deren reaktive Derivate, die wiederum in situ erzeugt werden können, mit den von

den Rest (I) abgeleiteten Hydroxycarbonsäuren oder deren reaktive Derivate, gegebenenfalls in Gegenwart von Katalysatoren, Kettenabbrechern und Verzweigungsmitteln, bei Temperaturen von 150 bis 380 °C, gegebenenfalls unter vermindertem Druck, umsetzt.

4. Verfahren nach Anspruch 1, dadurch gekennzeichnet, daß sich eine Festphasennachkondensation anschließt.

5. Verwendung der Polyesterimide nach Ansprüchen 1 und 2 zur Herstellung von Formkörpern, Filamenten, Fasern und Folien.

6. Formmassen auf Basis der Polyesterimide nach Ansprüchen 1 und 2, dadurch gekennzeichnet, daß sie 5 bis 65 Gew.-% eines Verstärkungs- und/oder Füllstoffes, bezogen auf die verstärkte und/oder gefüllte Formmasse, enthalten.

Europäisches Patentamt

# EUROPÄISCHER RECHERCHENBERICHT

Nummer der Anmeldung

EP 88 11 7457

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 213 609 (IDEMITSU KOSAN CO. LTD)<br>* Ansprüche 1,2 *<br>--- | 1-6 | C 08 G 73/16 |
| A | EP-A-0 171 707 (BAYER AG)<br>* Anspruch 1 *<br>--- | 1-6 | |
| A | PATENT ABSTRACTS OF JAPAN, Band 7, Nr. 155 (C-175)[1300], 7. Juli 1983; & JP-A-58 67 725 (MITSUI TOATSU KAGAKU K.K.) 22-04-1983<br>* Insgesamt *<br>--- | 1-6 | |
| A,D | US-A-4 383 105 (IRWIN)<br>* Ansprüche *<br>----- | 1-6 | |

RECHERCHIERTE SACHGEBIETE (Int. Cl.4)

C 08 G

Der vorliegende Recherchenbericht wurde für alle Patentansprüche erstellt

| Recherchenort | Abschlußdatum der Recherche | Prüfer |
|---|---|---|
| DEN HAAG | 30-01-1989 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)